# EUROPEAN PATENT SPECIFICATION

(11) **EP 3 879 166 B1**
(45) Date of publication and mention of the grant of the patent: **15.11.2023**
(21) Application number: 20161738.8
(22) Date of filing: 09.03.2020
(51) Int. Cl.: F21K 9/61

(54) **LIGHT EMITTING DEVICE AND MANUFACTURING METHOD**
LICHTEMITTIERENDE VORRICHTUNG UND HERSTELLUNGSVERFAHREN
DISPOSITIF ÉLECTROLUMINESCENT ET PROCÉDÉ DE FABRICATION

(43) Date of publication of application: 15.09.2021
(73) Proprietor: Lumileds LLC, San Jose, CA 95131 (US)
(72) Inventor: CROMPVOETS, Floris Maria Hermansz, 52068 Aachen (DE); SPINGER, Benno, 52068 Aachen (DE); MONESTIER, Florent, 52068 Aachen (DE)
(74) Representative: Cohausz & Florack

(56) References cited:
- EP-A1- 1 867 916
- KR-B1- 102 028 386
- US-A1- 2002 097 578
- US-A1- 2009 086 508
- US-A1- 2012 275 139
- US-A1- 2013 121 001

## Description

### FIELD OF THE INVENTION

The invention relates to the field of lighting, and more specifically to a light emitting device and a method of manufacturing a light emitting device. In particular, the invention relates to a light emitting device comprising a plurality of spaced apart LED units.

### BACKGROUND OF THE INVENTION

Light emitting devices with a plurality of LED units can be used for a variety of purposes, such as for illumination and signaling. The present invention is particularly directed to a light emitting device comprising a light emitting top surface of relatively large size, extending in two dimensions. It is particularly desirable to achieve more or less homogeneous illumination over the surface. Light emitting devices according to the state of the art are disclosed in documents US2009/086508 A1 and EP1867916 A1.

### DISCLOSURE OF INVENTION

It may be considered an object to provide a light emitting device and manufacturing method therefor which is of simple construction, well scaleable to different sizes and allows to achieve homogeneous illumination distributed over a relatively large area.

The object may be addressed by a light emitting device according to claim 1 and a method of manufacturing a light emitting device according to claim 15. Dependent claims refer to preferred embodiments of the invention.

The light emitting device according to the invention comprises a board with a plurality of LED units and a flat light guide arranged thereon.

The term "board" is used herein to designate any type of body suitable as a substrate or carrier for mounting LED units on a top surface thereof. A flat, thin board is preferred, in particular with a width and length which are more than 10 times, particularly preferably more than 100 times larger than the thickness. The board may be a circuit board and may comprise, besides the LED units mounted on the board top surface, also electrical conductors connected thereto, preferably in the form of flat tracks provided on the board top surface. The board may be flexible, so that it may easily be bent to form a curved surface.

The term "LED unit" is used herein to refer to any type of solid state lighting element, such as e.g. light emitting diodes, organic light emitting diodes (OLED), laser diodes, etc. The term "LED unit" may also refer to a combination of multiple solid state lighting elements arranged in close proximity, such as light emitting diodes of different color. The LED units may be disposed to emit of the same color, or of different colors. Some or all of the LED units may also be multi colored LED units, disposed to emit different colors of light depending on operation.

The LED units are arranged on the board top surface at a distance from each other, e.g. spaced at a distance from each other of 4 mm or more, preferably 10 mm or more, particularly preferably 25 mm or more, which distances may be measured as mean distances between next neighbors. The distance between next neighbor LED units may preferably be at most 80 mm, further preferably at most 50 mm.

The LED units may be arranged on the board top surface e.g. in a matrix configuration with at least substantially equal spacing. Alternatively, the LED units may be arranged on the surface in different configurations, including a stochastic distribution.

In accordance with the invention, a flat light guide is arranged to cover the LED units and the board top surface. The light guide is preferably made from a fully or partly transparent material, in which light can propagate. The light guide is preferably a flat, plane, thin member, e.g. with a length and width of more than 10 times, particularly preferably more than 100 times larger than the thickness. The light guide may e.g. have a thickness of 300 µm - 3mm, preferably 500µm - 2mm, particularly preferably 700µm - 1,5mm. In particular, flexible materials are preferred for the light guide, such that the light guide - and preferably both the light guide and the board - may be bent to form curved surfaces. For example, the light guide may be made from a plastic material, such as PMMA or PC. The light guide may be provided as a light guiding foil.

The light guide comprises a light guide bottom surface, in which a plurality of cavities are formed. The light guide is arranged on top of the board, such that the LED units are arranged to project at least partly into the cavities. Preferably, the size of the cavities may match the size of the LED units, in particular in width and length dimension, such that the cavities are larger than the LED units, however preferably not by much. For example, the length and/or width of the cavities may be sized to no more than 300 % of the corresponding dimension of the LED units, preferably 150 % or less, particularly preferably 120 % or less.

According to the invention, a plurality of spacer elements are arranged in between the light guide bottom surface and board top surface. The spacer elements serve to keep the board top surface and the light guide bottom surface at a distance from one another, such that an interspace is formed between them. Preferably, the board top surface and the light guide bottom surface are arranged in parallel. The spacer elements are fixed to the board top surface and to the light guide bottom surface. It is also possible, that one or both of the surfaces only abut against the spacer elements.

Advantageously, there are point or regions of contact between the spacer elements and the light guide bottom surface. The region of contact on the surface may be limited to a single point, to different points, or extend over a contact area which may have different shape and size, such as e.g. circular, square, etc. The size of the contact area, i.e. the surface area of the light guide bottom surface actually in contact with one spacer element, may be small, e.g. 1 mm² or less, preferably 0,1 mm² or less. In some embodiments, the contact area may even be significantly smaller, e.g. such as 0,01mm² or less or 0,001 mm² or less.

Arrangement of the board, LED units, spacer elements and the light guide allows to operate the LED units such that light emitted therefrom is coupled into the light guide to propagate therein. A portion of the light may undergo total internal reflection (TIR) at boundary surfaces of the light guide, such as the light guide bottom surface and/or a light guide upper surface. Thus, the light from the various LED units may distribute and mix within the light guide.

The spacer elements contacting the light guide bottom surface change the conditions at the boundary surface, such that at the points/regions of contact the conditions for total internal reflection are not met and light is coupled out. The light coupled out at the points/regions of contact between the spacer elements and the light guide bottom surface may be directed into different directions, including those forming a large enough angle to the surface of the light guide that the outcoupled light may traverse the light guide to be emitted from the opposed light guide upper surface.

The light emitting device may thus be comprised of only a few elements, such that a simple construction is achievable. The arrangement of the LED units and the spacer elements may easily be chosen to obtain desired distributions of the light emitted. In particular, a homogenous light emission may be achieved.

The light emitting device may have a high optical efficiency, in particular due to placement of the LED units within cavities of the light guide. One particular advantage may be that the light guide upper surface, opposed to the light guide bottom surface, need not be structured for outcoupling of the light, such that an even light emitting surface may be achieved. By a suitably choice of the board and light guide, a light emitting device of desired flexibility may be achieved, which may conform to curved surfaces.

The lighting device may be manufactured efficiently by arranging the LED units on the board top surface, providing the spacer element on the board top surface and/or on the light guide bottom surface, and by arranging the light guide to cover the LED units and the board top surface such that the LED units are received within the cavities, that the spacer elements contact the light guide bottom surface, and such that the board top surface and the light guide bottom surface are arranged at a distance.

In preferred embodiments, some or all of the LED units may be side emitting LED units. In side emitting LED units, light is emitted primarily or entirely from side surfaces, which are arranged at a large angle, preferably at least substantially perpendicularly to the board top surface on which the LED units are mounted. Only a relatively small portion of the light, or preferably none at all, may be emitted through a top surface of the LED units, arranged opposite to the board top surface. In particular, the LED unit may be provided with a top light barrier arranged to block light emitted into a top direction.

The height of the spacer elements, and correspondingly the distance at which the board top surface and light guide bottom surface are kept, may be chosen differently. A certain minimum distance should be kept to obtain a large enough interspace to ensure TIR conditions. The interspace in between the light guide bottom surface and board top surface may preferably be air filled, but could alternatively be evacuated or filled with a medium of lower optical density than the light guide. A preferred height of the spacer elements may e.g. be 30 - 300 µm, preferably 40 - 200 µm, particularly preferably 50 - 100 µm.

The spacer elements may be of different shapes, e.g. cubic, spherical, cylindrical, frustro-conical, half-spherical etc. A width of the spacer elements, i.e. largest dimension measured in a direction parallel to the board top surface, may be e. g. 10 - 1000 µm, preferably 40 - 200 µm, particularly preferably 30 - 100 µm.

According to the invention, the spacer elements are arranged fixed to the board top surface and to the light guide bottom surface, thereby fixing the two surfaces in relative relation. The spacer elements may be fixed to the two surfaces in different manner, e.g. by gluing, melting, etc. For example, the spacer elements may be provided on one of the surfaces, preferably the board top surface, e.g. by a printing method. The other surface, preferably the light guide bottom surface, may then be fixed to the spacer elements e.g. by a lamination process, for example under pressure and/or heat.

The spacer elements may be of different types of material, in particular plastic material. Particularly preferred is a material that is at least part silicone. The spacer elements may be provided as a lacquer. In preferred embodiments, the spacer elements are of white color to minimize absorption of light coupled out. For example, the spacer elements may be comprised of particles, particularly white particles, such as e.g. TiO₂, embedded in a matrix material, such as a silicone matrix.

Preferably, the number of spacer elements of the light emitting device is higher than the number of LED units, in particular at least 10 times higher. This provides a plurality of locations where light propagating within the light guide is coupled out, such that a more uniform distribution may be achieved. The spacer elements may be provided in different arrangements, such as e.g. a matrix arrangement. Preferably, they may be stochastically distributed over the surface, to avoid regular patterns being formed that are easily recognizable. The spacer elements are arranged with a varying density, depending on the distance to the nearest LED unit, to achieve a desired intensity distribution of light emitted from the device. In preferred embodiments, the spacer elements may be arranged such that their density increases with increasing distance from the nearest LED unit. Ideally, the density of the spacer elements may be chosen such that uniform intensity distribution of light emitted from the light emitting device is achieved. In addition to varying the density of the spacer elements, it is also possible to vary the shape and/or size of the contact area of the spacer elements and the light guide bottom surface, to therefore achieve outcoupling of more or less light at each point/region of contact.

By a suitable choice of the spacing of the LED units as well as both the density and the shape/size of the spacer elements, a desired distribution of the intensity of the emitted light may be achieved. The LED units and spacer elements are preferably distributed to achieve a relatively homogenous illumination distribution over the surface, in particular such that a luminance variation over the surface is limited. For example, the distribution of LED units and spacer elements may be chosen such that a minimum luminance (e.g. luminance of light emitted at a location farthest from two LED units) is at least 50% that of a maximum luminance. Preferably, the minimum luminance is at least 90% of the maximum luminance.

The led units may be electrically connected in different configurations, such as e.g. in parallel, in series, in series or parallel groups connected in series or parallel, etc. In particular, they may be electrically connected to be operated only jointly, which simplifies wiring. Preferably, the LED units may be electrically connected to be operated separately as individual LED units or to be operated separately in groups of multiple LED units. By providing an electrical connection that allows individual operation of single LED units or groups thereof, a certain localization of light emitted from the light guide may be achieved, thus allowing lighting effects such as locally varying intensity, patterns, moving light effects, or even displaying e.g. symbols.

Different types of led units may be used, preferably LED units emitting at least a substantial portion of the light towards the sides rather than towards the top. The LED units may e.g. have a height of 500 µm or less, preferably 300 µm or less. A particularly preferred type of LED units comprises at least one primary light emitting portion disposed to emit first light of a primary color and a converter portion disposed to receive the first light and emit second light of a secondary color. The primary and secondary color may differ depending on the properties of the converter portion. The primary light emitting portion may preferably be disposed to emit first light of blue color. The converter portion may preferably comprise at least one phosphor layer disposed such that light of the primary color is converted e.g. to second light of white color. In particular, the LED element and the converter portion may be arranged as layers on top of each other, with the converter portion preferably above the LED element. Further preferred, the first light emitted from the LED element may be prevented from being emitted directly from the LED units. In particular, a side light barrier may be arranged to block light emitted from the primary light emitting portion into the side direction.

These and other aspects of the invention will be apparent from and elucidated with reference to the embodiments described hereinafter.

### BRIEF DESCRIPTION OF THE DRAWINGS

In the drawings:
- Fig. 1: shows a perspective view of an embodiment of a light emitting device;
- Fig. 2: shows a sectional view of a portion of the light emitting device of Fig. 1;
- Fig. 3: shows a top view of the light emitting device of Fig. 1;
- Fig. 4: shows an enlarged sectional view of a portion of the light emitting device of Fig. 1, Fig.3;
- Fig. Sa - 5d: show parts of the light emitting device of Fig. 1-4 during subsequent manufacturing steps.

### DETAILED DESCRIPTION OF EMBODIMENTS

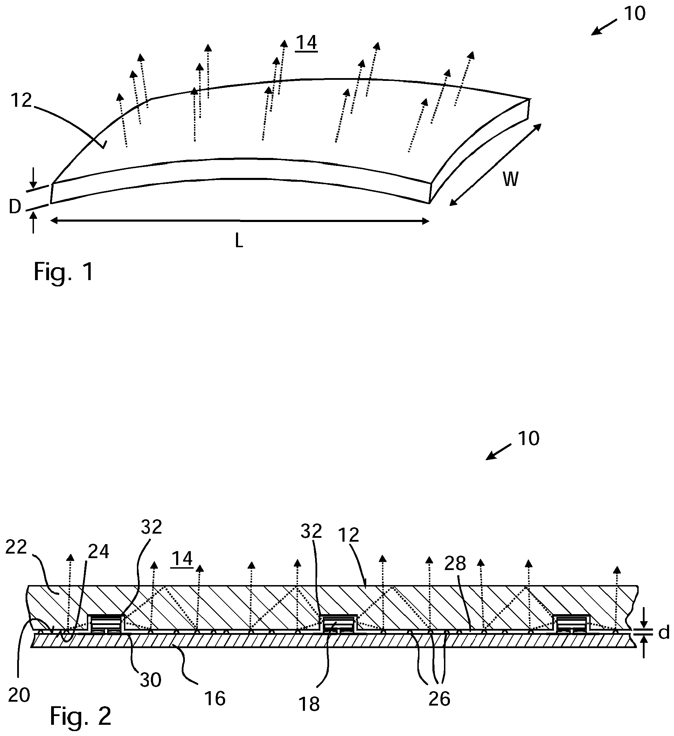

Fig. 1 shows a perspective view of an embodiment of a light emitting device 10. It should be recognized that the shape and dimensions of the light emitting device 10 are shown in figure 1 and subsequent drawings as examples only, serving to better illustrate features of the device. However, the drawings are not necessarily to scale, and a skilled person will understand that the device and parts thereof may easily be adapted to different dimensions, in particular to different length L, width W or thickness D.

The light emitting device 10 is of thin, flat shape, for example with a total thickness d of about 1.25 mm and a significantly larger extension in length L and width W of several centimeters or tens of centimeters. The light emitting device 10 is flexible, such that it may easily be bent to a curved shape as shown in Fig. 1. It comprises a light emitting top surface 12 from which light 14, shown in dotted lines, is emitted with a relatively homogeneous intensity distribution over the surface area.

As shown in the sectional view of Fig. 2, the light emitting device 10 is essentially comprised of two foils or layers arranged on top of each other, namely a flexible circuit board 16 with LED units 18 arranged on a board top surface 20 thereof, and a light guide 22 with a light guide bottom surface 24 and an opposed light guide upper surface, which also constitutes the light emitting top surface 12 of the light emitting device 10.

Spacer elements 26 are provided in between the light guide 22 and the circuit board 16, specifically between the light guide bottom surface 24 and the board top surface 20. These two surfaces are kept apart at a distance d of about 80 µm. Between the light guide bottom surface 24 and the board top surface 20 thus remains a free space 28, which is air filled. The spacer elements 26 contact the light guide bottom surface 24 at points or regions of contact. In the embodiments shown, the spacer elements 26 have a half ellipsoid shape, such that the contact regions on the light guide bottom surface 24 are at least substantially circular.

The circuit board 16 is provided with conductor tracks 30 on the board top surface 20 to electrically connect to the LED units 18.

The circuit board 16 is a thin polyimide circuit board of a thickness of e.g. 100 µm, such that it is flexible and may easily be bent. The light guide 22 has a thickness of 1 mm and is made of a transparent, flexible material such as PMMA or PC. Thus, the entire light emitting device 10 may be bent as shown e.g. in Fig. 1.

While the light guide bottom surface 24 and opposed light guide upper surface 12 are otherwise flat and even, there are formed within the light guide bottom surface 24 a number of cavities 32. The LED units 18 are arranged within the cavities 32.

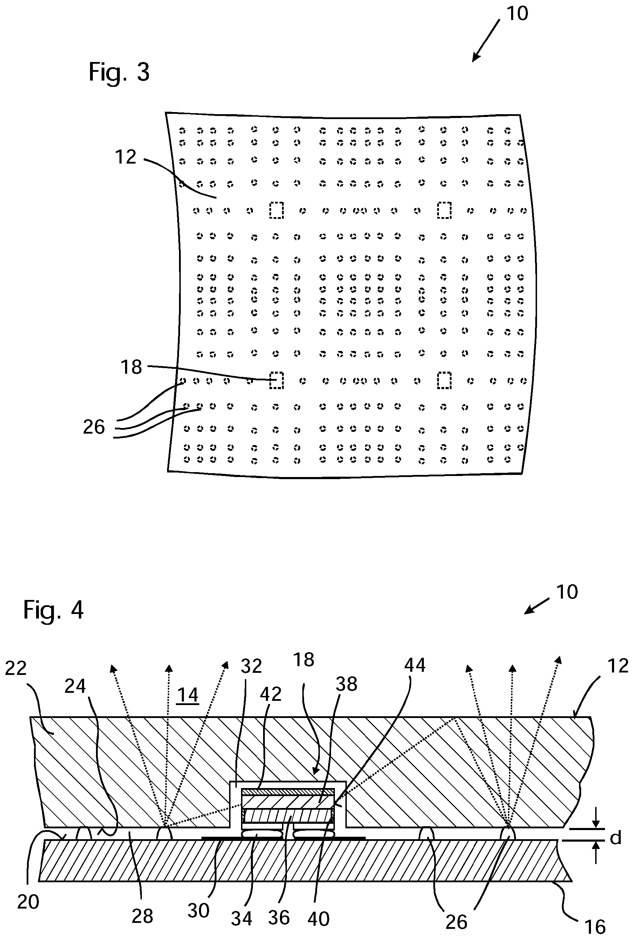

Fig. 4 shows an enlarged sectional view of an LED unit 18 mounted on the board top surface 20 and both mechanically and electrically connected to the conductor tracks 30 via solder pads 34.

As schematically shown, the cavity 32 matches in size the LED element 18 with a small space remaining. The LED element 18 is arranged within the cavity 32 such that only small gaps remain between the material of the light guide 22 and the LED element 18.

The LED unit 18 comprises a primary light emitting layer 36 and a conversion layer 38 arranged on top of it. The primary light emitting layer 36 is operable to emit first light of a primary color, e.g. blue, which is converted by a phosphor converter layer 38 into second light of a secondary color, e.g. white. The first light of the primary color is not emitted to the outside due to side mirror coatings 40 acting as side light barrier. Thus, the entire first light generated in operation of the LED element 18 is emitted into the conversion layer 38. A reflective top light barrier 42 is arranged on top of the converter layer 38, such that the second light from the converter layer 38 is emitted through side surfaces 44 arranged perpendicularly to the light guide bottom surface 24.

The LED units 38 are thus side-emitting LEDs. The light emitting side surfaces 44 are arranged at a height in between the light guide bottom surface 24 and the light guide top surface 12. Thus, the emitted light is coupled into the light guide 22 to propagate therein.

Due to the side direction into which the light from the LED unit 18 is primarily emitted, a large portion of the emitted light propagates into directions forming a small angle with the boundary surfaces 12, 24 of the light guide 22, such that total internal reflection occurs at the boundary surfaces and the emitted light propagates within the material of the light guide 22.

Both the light guide bottom surface 24 and the light guide top surface 12 are even, with no patterns or surface structure (except for the cavities 32), so that the light can propagate internally over significant distances with minimal loss. The air-filled interspace 28 between the circuit board 16 and the light guide 22 ensures TIR conditions. However, at the points or regions of contact between the spacer elements 26 and the light guide bottom surface 24, light is coupled out as schematically shown in Fig. 4. The outcoupled light emitted under sufficiently large angles to the parallel top and bottom surfaces 12, 24 of the light guide 22 traverses the light guide 22 and is emitted from the top surface 12 thereof.

As shown schematically e.g. in Fig. 2, a plurality of spacer elements 26 are arranged between the LED units 18, distributed over the area of the light guide bottom surface 24. Thus, many separate locations are provided, well distributed over the surface area, at which light propagating within the light guide 22 is coupled out to be emitted as light 14 from the light emitting surface 12.

An even distribution of the spacer elements 26, which provide the locations at which light is coupled out, would lead to a non-uniform intensity distribution of the emitted light 14, because in the shown preferred embodiment with spacer elements 26 of the same size and shape, more light would be emitted at locations closer to the nearest LED unit 18 and less light would be emitted at grater distances from the nearest LED unit 18. To counter this effect, the distribution of the spacer elements 26 is chosen, as schematically shown e.g. in Fig. 2, non-uniform with a density (number of spacer elements 26 per surface area unit) increasing with increasing distance from the nearest LED element 18.

Fig. 3 shows an example of a relative arrangement of the LED units 18 and spacer elements 26 over the surface area of the light emitting surface 12. It should be recognized that figure 3 is intended to illustrate the general idea rather than precisely showing the relative arrangement to scale.

As visible from Fig. 3, the spacer elements 26 are arranged at larger distances from each other, i.e. at a lower density, close to the LED units 18 and at smaller distances, i.e. with higher density, at larger distances from the nearest LED unit 18.

As the skilled person will appreciate, the actual placement of the spacer elements 26 may differ from the relatively regular matrix arrangement shown in Fig. 3. In alternative embodiments, the spacer elements 26 may be arranged irregularly and stochastically to avoid forming distinct patterns.

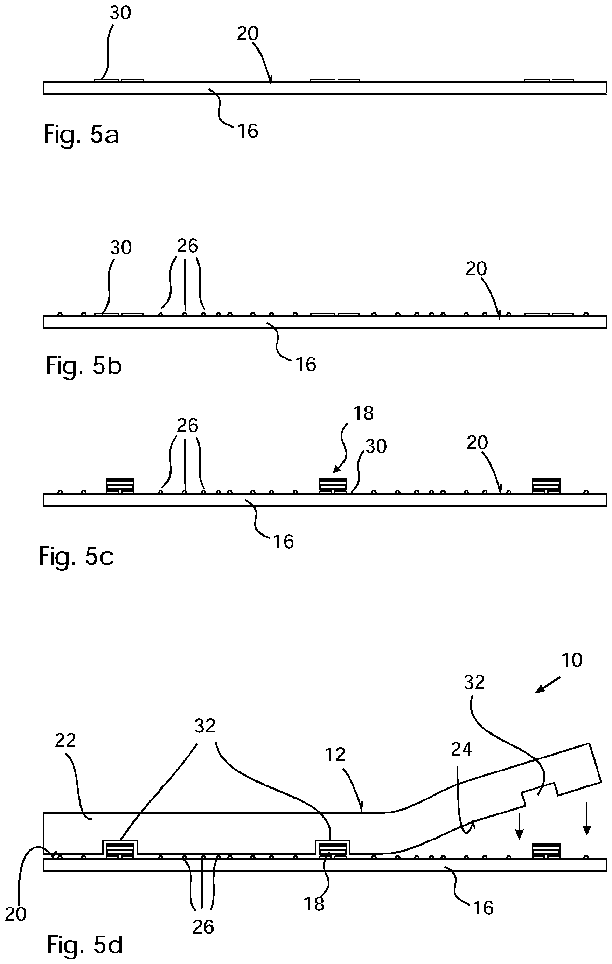

Possible steps of a manufacturing method are illustrated by Fig. 5a-5d.

In a first step (Fig. 5a), copper conductor tracks 30 may be provided on the board top surface 20 of the circuit board 16.

In a following step (Fig. 5b), the spacer elements 26 may be arranged on the board top surface 20, in particular as lacquer material by a printing method, such as screenprinting. The preferred material comprises TiO₂ particles dispersed in a silicone matrix to form spacer elements 26 of white color.

In the next step (Fig. 5c), LED elements 18 are soldered to the conductor tracks 30.

Next, the light guide 22 is provided with cavities 32, e.g. by embossing the cavities 32 into a PMMA or PC foil.

In a final assembly step (Fig. 5d), the flexible light guide 22 and the circuit board 16 are positioned such that the cavities 32 and LED units 18 are aligned. The light guide 22 and the circuit board 16 are then laminated together such that the LED units 18 are received within the cavities 32. The light guide 22 is laminated on top of the spacer elements 26 e.g. by gluing or under heat and/or pressure such that the spacer elements 26 contact the light guide bottom surface 24 and attach thereto, thus fixing the light guide 22 relative to the circuit board 16.

The resulting flexible light emitting device 10 may thus be manufactured easily in large dimensions L, W and with any desired shape. Due to its flexible properties, it may be provided on curved surfaces, such as portions on the inside or outside of an automobile. By selectively providing electrical operating power to the LED units 18 through suitable wiring (not shown), a desired emission of light 14 from the light emitting top surface 12 may be achieved.

It should be noted that the above mentioned embodiments illustrate rather than limit the invention, and that those skilled in the art will be able to design many alternative embodiments without departing from the scope of the appended claims.

In the claims, any reference signs shall not be construed as limiting the scope. The word "comprising" does not exclude the presence of elements or steps other than those listed in a claim. The word "a" or "an" proceeding an element does not exclude the presence of a plurality of such elements. The mere fact, that certain measures are recited in mutually different dependent claims does not indicate that a combination of these measures cannot be used to advantage.

## Claims

1. Light emitting device, comprising
- a board (16) comprising a board top surface (20),
- a plurality of LED units (18) arranged on said board top surface (20) at a distance from each other,
- a flat light guide (22) arranged to cover said LED units (18) and said board top surface (20),
- said light guide (22) comprising a light guide bottom surface (24), wherein a plurality of cavities (32) are formed within said light guide bottom surface (24), and wherein said LED units (18) are arranged to project into said cavities (32),
- and a plurality of spacer elements (26) being arranged in between said board top surface (20) and said light guide bottom surface (24), such that said board top surface (20) and said light guide bottom surface (24) are kept at a distance (d),
**characterized in that,**
- said spacer elements (26) are arranged fixed to said board top surface (20) and to said light guide bottom surface (24), and
- said spacer elements (26) are distributed over said board top surface (22) with a density increasing with increasing distance from said LED units (18).

2. Light emitting device according to claim 1, wherein
- said LED units (18) are side emitting LED units.

3. Light emitting device according to one of the above claims, wherein
- said board (16) and said light guide (22) are flexible.

4. Light emitting device according to one of the above claims, wherein
- said spacer elements have a height of 30 - 300 µm.

5. Light emitting device according to one of the above claims, wherein
- said spacer elements have a width of 10 - 1000 µm.

6. Light emitting device according to one of the above claims, wherein
- said spacer elements (26) are of white color.

7. Light emitting device according to one of the above claims, wherein
- said LED units (18) are arranged at a distance of 4 mm or more.

8. Light emitting device according to one of the above claims, wherein
- a number of said spacer elements (26) is at least 10 times higher than a number of said LED units (18).

9. Light emitting device according to one of the above claims, wherein
- said LED units (18) are electrically connected to be operated separately as individual LED units (18) or in groups.

10. Light emitting device according to one of the above claims, wherein
- said light guide has a thickness of 300 µm - 3 mm.

11. Light emitting device according to one of the above claims, wherein
- said LED units (18) comprise at least a primary light emitting portion (36) disposed to emit first light of a primary color, and a converter portion (38) disposed to receive said first light and to emit second light of a secondary color,
- wherein a side light barrier (40) is arranged to block light emitted from said primary light emitting portion (38) into a side direction.

12. Light emitting device according to one of the above claims, wherein
- said LED units (18) comprise a top light barrier (42) arranged to block light emitted into a top direction.

13. Method of manufacturing a light emitting device, comprising
- arranging a plurality of LED units (18) at a distance from each other on a board top surface (20) of a board (16),
- providing a flat light guide (22) comprising a light guide bottom surface (24), a plurality of cavities (32) being formed within said light guide bottom surface (24),
- providing a plurality of spacer elements (26) on said board top surface (20) and/or on said light guide bottom surface (24),
- arranging said light guide (22) to cover said LED unit (18) and said board top surface (20) such that said LED units (18) are arranged to project into said cavities (32), such that the spacer elements (26) contact the light guide bottom surface (24), and such that said board top surface (20) and said light guide bottom surface (24) are arranged at a distance (d),
**characterized in that,**
- said spacer elements (26) are arranged fixed to said board top surface (20) and to said light guide bottom surface (24), and
- said spacer elements (26) are distributed over said board top surface (22) with a density increasing with increasing distance from said LED units (18).

## Patentansprüche

1. Lichtemittierende Vorrichtung, umfassend
- eine Platine (16) mit einer Platinenoberseite (20),
- eine Vielzahl von LED-Einheiten (18), die auf der Platinenoberfläche (20) in einem Abstand zueinander angeordnet sind,
- einen flachen Lichtleiter (22), der so angeordnet ist, dass er die LED-Einheiten (18) und die Oberseite der Platine (20) abdeckt,
- wobei der Lichtleiter (22) eine Lichtleiter-Bodenfläche (24) umfasst, wobei eine Vielzahl von Hohlräumen (32) innerhalb der Lichtleiter-Bodenfläche (24) ausgebildet sind und wobei die LED-Einheiten (18) so angeordnet sind, dass sie in die Hohlräume (32) hineinragen,
- und eine Vielzahl von Abstandselementen (26), die zwischen der Platinenoberseite (20) und der Lichtleiterunterseite (24) angeordnet sind, so dass die Platinenoberseite (20) und die Lichtleiterunterseite (24) in einem Abstand (d) gehalten werden,
**dadurch gekennzeichnet**,
- die Abstandshalterelemente (26) an der Platinenoberseite (20) und an der Lichtleiterunterseite (24) befestigt sind, und
- die Abstandselemente (26) über die Platinenoberfläche (22) verteilt sind mit einer mit zunehmendem Abstand von den LED-Einheiten (18) zunehmenden Dichte.

2. Lichtemittierende Vorrichtung nach Anspruch 1, wobei
- die LED-Einheiten (18) seitlich emittierende LED-Einheiten sind.

3. Lichtemittierende Vorrichtung nach einem der vorstehenden Ansprüche, wobei
- die Platine (16) und der Lichtleiter (22) flexibel sind.

4. Lichtemittierende Vorrichtung nach einem der vorstehenden Ansprüche, wobei
- die Abstandselemente eine Höhe von 30 - 300 µm aufweisen.

5. Lichtemittierende Vorrichtung nach einem der vorstehenden Ansprüche, wobei
- die Abstandselemente eine Breite von 10 bis 1000 µm aufweisen.

6. Lichtemittierende Vorrichtung nach einem der obigen Ansprüche, wobei
- die Abstandselemente (26) von weißer Farbe sind.

7. Lichtemittierende Vorrichtung nach einem der vorstehenden Ansprüche, wobei
- die LED-Einheiten (18) in einem Abstand von 4 mm oder mehr angeordnet sind.

8. Lichtemittierende Vorrichtung nach einem der vorstehenden Ansprüche, wobei
- die Anzahl der Abstandselemente (26) mindestens 10-mal höher ist als die Anzahl der LED-Einheiten (18).

9. Lichtemittierende Vorrichtung nach einem der vorstehenden Ansprüche, wobei
- die LED-Einheiten (18) elektrisch so verbunden sind, dass sie als einzelne LED-Einheiten (18) oder in Gruppen separat betrieben werden können.

10. Lichtemittierende Vorrichtung nach einem der obigen Ansprüche, wobei
- der Lichtleiter eine Dicke von 300 µm - 3 mm aufweist.

11. Lichtemittierende Vorrichtung nach einem der vorstehenden Ansprüche, wobei
- die LED-Einheiten (18) mindestens einen primären Lichtemissionsabschnitt (36), der so angeordnet ist, dass er ein erstes Licht einer Primärfarbe emittiert, und einen Konverterabschnitt (38) der so angeordnet ist, dass er das erste Licht empfängt und ein zweites Licht einer Sekundärfarbe emittiert, umfassen,
- wobei eine Seitenlichtschranke (40) so angeordnet ist, dass sie das von dem primären lichtemittierenden Abschnitt (38) in eine seitliche Richtung emittierte Licht blockiert.

12. Lichtemittierende Vorrichtung nach einem der obigen Ansprüche, wobei
- die LED-Einheiten (18) eine obere Lichtschranke (42) umfassen, die so angeordnet ist, dass sie in eine obere Richtung emittiertes Licht blockiert.

13. Verfahren zur Herstellung einer lichtemittierenden Vorrichtung, umfassend
- Anordnen einer Vielzahl von LED-Einheiten (18) in einem Abstand zueinander auf einer Platinenoberfläche (20) einer Platine (16),
- Bereitstellen eines flachen Lichtleiters (22) mit einer Lichtleiter-Bodenfläche (24), wobei eine Vielzahl von Hohlräumen (32) in der Lichtleiter-Bodenfläche (24) ausgebildet ist,
- Bereitstellen einer Vielzahl von Abstandshalterelementen (26) auf der Platinenoberseite (20) und/oder auf der Lichtleiterunterseite (24),
- Anordnen des Lichtleiters (22), um die LED-Einheit (18) und die Platinenoberseite (20) zu bedecken, so dass die LED-Einheiten (18) so angeordnet sind, dass sie in die Hohlräume (32) hineinragen, so dass die Abstandselemente (26) die Lichtleiterunterseite (24) berühren, und so, dass die Platinenoberseite (20) und die Lichtleiterunterseite (24) in einem Abstand (d) angeordnet sind,
**dadurch gekennzeichnet,**
- **dass** die Abstandshalterelemente (26) an der Platinenoberseite (20) und an der Lichtleiterunterseite (24) befestigt sind, und
- **dass** die Abstandselemente (26) über die Platinenoberfläche (22) mit einer Dichte verteilt sind, die mit zunehmendem Abstand von den LED-Einheiten (18) zunimmt.

## Revendications

1. Dispositif d'émission de lumière, comprenant
- une planche (16) comprenant une surface supérieure (20),
- une pluralité d'unités LED (18) disposées sur ladite surface supérieure de la planche (20) à une certaine distance les unes des autres,
- un guide de lumière plat (22) conçu pour couvrir lesdites unités LED (18) et ladite surface supérieure de la planche (20),
- ledit guide de lumière (22) comprenant une surface inférieure de guide de lumière (24), dans lequel une pluralité de cavités (32) sont formées dans ladite surface inférieure de guide de lumière (24), et dans lequel lesdites unités LED (18) sont disposées à se projeter dans lesdites cavités (32),
- et une pluralité d'éléments d'espacement (26) disposés entre ladite surface supérieure de la planche (20) et ladite surface inférieure du guide de lumière (24), de sorte que ladite surface supérieure de la planche (20) et ladite surface inférieure du guide de lumière (24) sont maintenues à une distance (d), caractérisé dans ce domaine,
- lesdits éléments d'espacement (26) sont fixés à ladite surface supérieure de la planche (20) et à ladite surface inférieure du guide de lumière (24), et
- lesdits éléments d'espacement (26) sont répartis sur ladite surface supérieure de la planche (22) avec une densité qui augmente avec la distance par rapport aux unités LED (18).

2. Dispositif d'émission de lumière selon la revendication 1, dans lequel les unités LED (18) sont des unités LED à émission latérale.

3. Dispositif d'émission de lumière selon l'une des revendications précédentes, dans lequel ladite planche (16) et ledit guide de lumière (22) sont flexibles.

4. Dispositif d'émission de lumière selon l'une des revendications précédentes, dans lequel les éléments d'espacement ont une hauteur de 30 à 300 µm.

5. Dispositif d'émission de lumière selon l'une des revendications précédentes, dans lequel les éléments d'espacement ont une largeur de 10 à 1000 µm.

6. Dispositif d'émission de lumière selon l'une des revendications précédentes, dans lequel les éléments d'espacement (26) sont de couleur blanche.

7. Dispositif d'émission de lumière selon l'une des revendications précédentes, dans lequel les unités LED (18) sont disposées à une distance de 4 mm ou plus.

8. Dispositif d'émission de lumière selon l'une des revendications précédentes, dans lequel le nombre de ces éléments d'espacement (26) est au moins 10 fois supérieur au nombre de ces unités LED (18).

9. Dispositif d'émission de lumière selon l'une des revendications précédentes, dans lequel les unités LED (18) sont connectées électriquement pour être utilisées séparément en tant qu'unités LED individuelles (18) ou en groupes.

10. Dispositif d'émission de lumière selon l'une des revendications précédentes, dans lequel le guide de lumière a une épaisseur de 300 µm à 3 mm.

11. Dispositif d'émission de lumière selon l'une des revendications précédentes, dans lequel
- lesdites unités LED (18) comprennent au moins une partie émettrice de lumière primaire (36) destinée à émettre une première lumière d'une couleur primaire, et une partie convertisseur (38) destinée à recevoir ladite première lumière et à émettre une seconde lumière d'une couleur secondaire,
- dans lequel une barrière lumineuse latérale (40) est conçue pour bloquer la lumière émise par ladite partie émettrice de lumière primaire (38) dans une direction latérale.

12. Dispositif d'émission de lumière selon l'une des revendications précédentes, dans lequel lesdites unités LED (18) comprennent une barrière lumineuse supérieure (42) conçue pour bloquer la lumière émise dans une direction supérieure.

13. Procédé de fabrication d'un dispositif d'émission de lumière, comprenant
- disposer une pluralité d'unités LED (18) à une certaine distance les unes des autres sur la surface supérieure (20) d'une planche (16),
- fournir un guide de lumière plat (22) comprenant une surface inférieure de guide de lumière (24), une pluralité de cavités (32) étant formées à l'intérieur de ladite surface inférieure de guide de lumière (24),
- fournir une pluralité d'éléments d'espacement (26) sur ladite surface supérieure de la planche (20) et/ou sur ladite surface inférieure du guide de lumière (24),
- disposer ledit guide de lumière (22) de manière à couvrir ladite unité LED (18) et ladite surface supérieure de la planche (20) de sorte que lesdites unités LED (18) soient disposées de manière à faire saillie dans lesdites cavités (32), de sorte que les éléments d'espacement (26) soient en contact avec la surface inférieure du guide de lumière (24), et de sorte que ladite surface supérieure de la planche (20) et ladite surface inférieure du guide de lumière (24) soient disposées à une certaine distance (d),
caractérisé dans ce domaine,
- lesdits éléments d'espacement (26) sont fixés à ladite surface supérieure de la planche (20) et à ladite surface inférieure du guide de lumière (24), et
- lesdits éléments d'espacement (26) sont répartis sur ladite surface supérieure de la planche (22) avec une densité qui augmente en fonction de la distance par rapport aux unités LED (18).
